Europäisches Patentamt

(19) European Patent Office   (11) Numéro de publication: **0 018 266**

Office européen des brevets   **B2**

(12) **NOUVEAU FASCICULE DE BREVET EUROPEEN**

(45) Date de publication du nouveau fascicule du brevet: **19.12.90**

(21) Numéro de dépôt: **80400463.8**

(22) Date de dépôt: **08.04.80**

(51) Int. Cl.⁵: **F 04 D 29/04** // F16C32/06, F04D29/06

(54) **Pompe centrifuge de circulation de fluide.**

(30) Priorité: **12.04.79 FR 7909333**

(43) Date de publication de la demande: **29.10.80 Bulletin 80/22**

(45) Mention de la délivrance du brevet: **26.06.85 Bulletin 85/26**

(45) Mention de la decision concernant l'opposition: **19.12.90 Bulletin 90/51**

(84) Etats contractants désignés: **BE CH DE GB IT LI NL SE**

(56) Documents cités:
**CH-A- 532 720**
**DE-A-1 811 430**
**GB-A- 805 824**
**NL-A-7 202 916**

**TECHNISCHE RUNDSCHAU SULZER, vol. 53, 1971, no. 3, A. FREI et al. "Pumpen für Kernkraftwerke", pages 135-144**
**Dessin KSB 510787001 de Klein, Schanzlin & Becker**

(73) Titulaire: **FRAMATOME**
**Tour Fiat 1, Place de la Coupole**
**F-92400 Courbevoie (FR)**

(72) Inventeur: **Raczynski, Wladyslaw**
**11 rue Henri Brochard**
**F-95580 Magency (FR)**

(74) Mandataire: **Fort, Jacques**
**CABINET PLASSERAUD 84, rue d'Amsterdam**
**F-75009 Paris (FR)**

EP 0018 266 B2

## Description

L'invention a pour objet une pompe centrifuge de circulation de fluide et s'applique spécialement au refroidissement de réacteurs nucléaires.

Les réacteurs nucléaires sont refroidis par circulation entre le réacteur et des générateurs de vapeur. Cette circulation du fluide de refroidissement est assurée par des motopompes primaires qui sont habituellement du type à axe vertical et qui comprennent essentiellement un moteur d'entraînement, un volant et la pompe proprement dite. Celle-ci comprend une roue formant rotor qui est alimentée axialement par une tubulure d'entrée et qui est entraînée en rotation à l'intérieur d'un stator formant un diffuseur de sortie qui débouche à l'intérieur d'une chambre d'écoulement. Dans le mode de réalisation décrit par exemple dans la revue "Technique Rundschau SULZER", Vol. 53, 1971, Nr. 3, page 136, figure 4 la chambre d'écoulement, entoure la tubulure d'entrée. Le rotor placé à l'extrémité de la tubulure d'entrée est monté en porte-à-faux à l'extrémité d'un arbre moteur qui s'étend dans le prolongement de l'axe de la tubulure d'entrée et traverse une paroi traversale limitant la chambre d'écoulement du côté opposé à la tubulure d'entrée. Le rotor se compose d'une pluralité d'ailettes fixées entre un disque monté à l'extrémité de l'arbre moteur et un flasque extérieur de forme torique et il tourne à l'interieur d'un stator qui forme un diffuseur de sortie comprenant une pluralité d'ailettes fixes disposées entre la paroi transversale de la chambre d'écoulement et un flasque extérieur torique placé dans le prolongement du flasque extérieur du rotor. Ce dernier est entouré par une pièce cylindrique qui raccorde l'extrémité de la tubulure au flasque du stator de façon à assurer la continuité du guidage du fluide.

Généralement, un joint à labyrinthe placé à l'entrée du rotor assure l'étanchéité entre les parties haute pression et basse pression de la pompe constituées respectivement par la chambre d'écoulement et par la tubulure d'entrée, l'étanchéité de l'entrée de l'arbre moteur dans la chambre d'écoulement étant assurée par des joints tournants d'étanchéité, de type classique. La ligne d'arbre entre le moteur et le rotor est portée par au moins deux paliers et le palier inférieur peut être dimenté par le fluide, par exemple l'eau, mise en circulation par le rotor.

Les paliers de l'arbre moteur peuvent être du type hydrodynamique ou hydrostatique.

Comme indiqué dans la revue SULZER page 139, pour fonctionner correctement, le palier hydrodyanmique doit être refroidi à une température de 60 à 80°C de façon à maintenir la viscosité de l'eau au-dessus d'une certaine valeur.

Pour éviter cet inconvénient, il est possible d'utiliser un palier hydrostatique dont le fonctionnement n'est pas subordonné à la valeur de la viscosité du fluide. Un tel palier hydrostatique, représenté à la Figure 6, page 137, de la revue SULZER, comprend un tourillon fixé sur l'arbre de rotor au-dessus de celui-ci et entouré par un coussinet constitué de plusieurs alvéoles de portance communiquant avec un anneau collecteur alimenté par de l'eau sous pression. Celle-ci est prélevée à la sortie du rotor et, après passage dans le palier, est recyclée en amont des ailettes du rotor. Or, en raison de la vitesse élevée de l'eau à la sortie du rotor et de l'effet de succion qui en résulte, la pression régnant dans l'anneau collecteur est irrégulière et la différence de pression dans le palier n'est pas très élevée.

Par ailleurs, dans les dispositions connues, le rotor est normalement monté en porte-à-faux à l'extrémité de l'arbre moteur, la distance entre le palier inférieur et le centre de gravité de la roue pouvant être plus ou moins importante suivant le type de palier choisi.

Dans le mode de réalisation de la revue SULZER, le palier hydrostatique étant placé juste au-dessus du rotor, le porte-à-faux est réduit mais reste notable. Les auteurs de l'article ne semblent pas avoir pris conscience des conséquences néfastes de ce montage.

Pour supprimer entièrement le porte-à-faux, il faut donc que le rotor s'appuie directement sur le corps de la pompe par son flasque extérieur.

Une disposition de ce genre est décrite, par exemple, dans le brevet néerlandais NL—A—72 02916. Dans un mode de réalisation particulier, les joints ménagés entre l'enveloppe fixe et les deux flasques du rotor constituent des paliers de support de ce dernier. A cet effet, chaque flasque du rotor comprend un évidement circulaire dans lequel s'engage une cloison solidaire de l'enveloppe de façon à ménager des fentes annulaires dans lesquelles le fluide prélevé dans une chambre communiquant avec le diffuseur de sortie, est mis en circulation forcée grâce à des canaux d'aspiration ménagés radialement dans le rotor. L'effet de centrage dépend donc de la viscosité du fluide et, par conséquent, de la température.

En revanche, dans le type de pompe auquel se limite l'invention et dans lequel le diffuseur débouche dans une chambre d'écoulement entourant la tubulure d'entrée, il est possible de faire supporter le rotor par un palier hydrostatique comprenant des alvéoles de portance alimentés par du fluide sous pression prélevé dans la chambre d'écoulement, en aval du diffuseur et dont l'efficacité ne dépend donc pas de la température du fluide.

On connaît par ailleurs (GB—A—805 824) une pompe centrifuge à palier hydrostatique ne comportant ni chambre d'écoulement entourant la tubulure d'entrée, ni stator en forme de diffuseur, ni pièce de raccordement. Le palier hydrostatique est porté directement par le boîtier de la pompe.

L'invention propose une pompe conforme à la revendication 1. Le débit de fluide pouvant s'évacuer aussi bien vers le bas que vers le haut du fait de l'équilibrage des pressions, l'efficacité du palier est augmentée.

L'invention sera mieux comprise par la description d'un mode de réalisation partculier, donné à titre d'exemple et représenté sur les dessins annexés.

La figure 1 est une vue schématique en élévation de l'ensemble d'une pompe selon l'invention.

La figure 2 représente, à échelle agrandie le rotor et le stator de la pompe.

La figure 3 est une vue de détail d'une variante de réalisation.

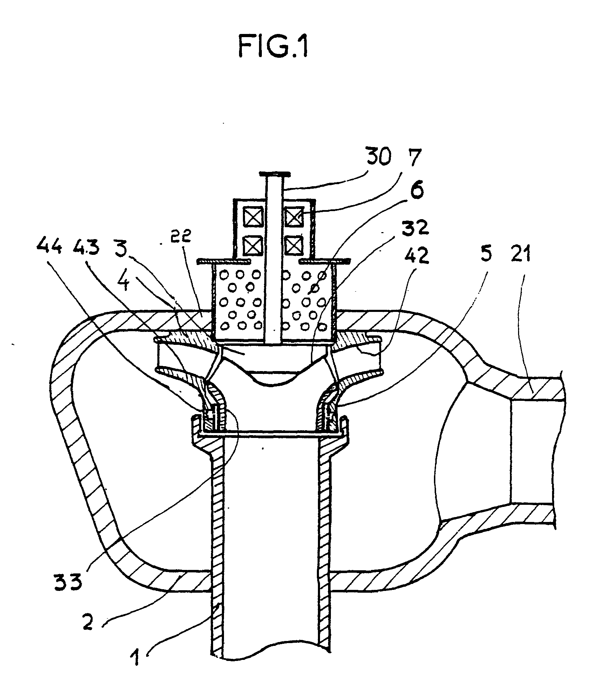

Sur la figure 1, on a représenté l'ensemble d'une pompe comportant une tubulure d'entrée 1 pénétrant dans l'axe d'une chambre d'écoulement 2 de forme torique reliée à une tubulure de sortie 21. La tubulure d'entrée 1 débouche à son extrémité dans un rotor 3 qui est monté à l'extrémité d'un arbre 30 relié à un moteur non représenté. Le rotor 3 tourne à l'intérieur d'un stator 4 qui est monté à l'intérieur de la chambre d'écoulement 2 et le stator constitue le diffuseur de sortie du fluide mis en circulation par la rotation du rotor.

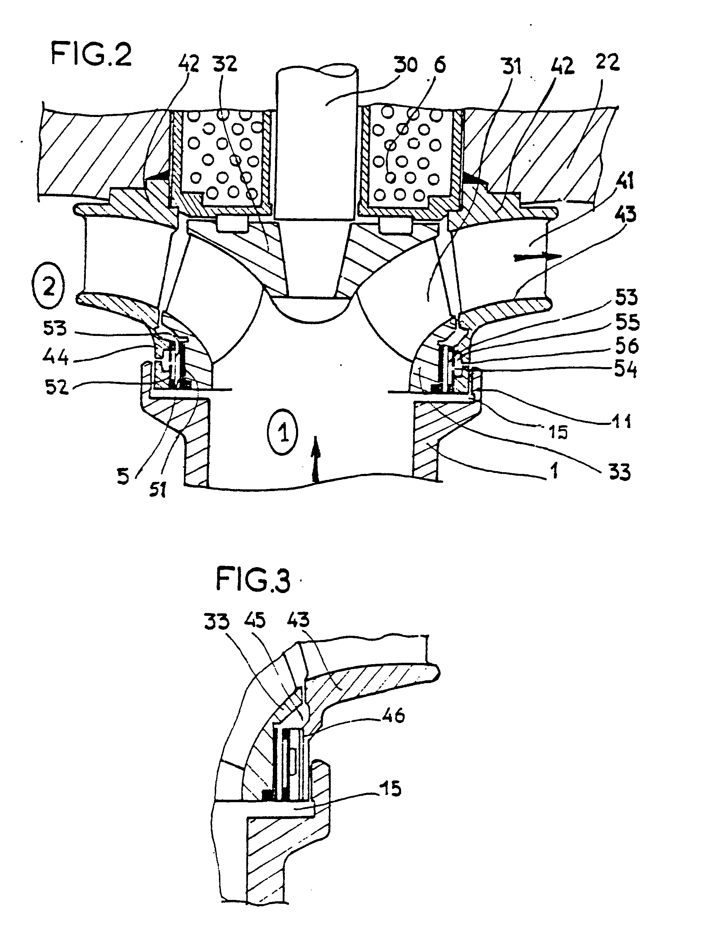

A cet effet, comme représenté sur la figure 2, le rotor comprend une pluralité d'ailettes 31 fixées entre un disque 32 monté en porte-à-faux à l'extrémité de l'arbre 30 et un flasque extérieur 33 de forme interne torique. La pompe est donc du type hélico-centrifuge; le courant de fluide arrive axialement par la tubulure d'entrée et est dévié radialement vers la chambre d'écoulement 2. Le guidage du fluide à la sortie du rotor est assuré par le diffuseur de sortie 4 qui comprend une pluralité d'ailettes fixes 41 montées entre un disque 42 qui assure le raccordement entre le disque 32 du rotor et la paroi 22 de la chambre d'écoulement et un flasque extérieur 43 dont la face interne de forme torique prolonge celle du flasque 33 du rotor.

En amont, le flasque extérieur 43 du stator est prolongé par une pièce 44 sensiblement cylindrique qui entoure la partie amont du flasque extérieur 33 du rotor et assure d'autre part le raccordement avec l'extrémité de la tubulure d'entrée 1, celle-ci étant munie à cet effet d'un embout 11 qui s'emboîte extérieurement sur la pièce de raccordement 44.

Selon l'invention, le rotor 3 est guidé, en amont de l'arbre 30, par un palier hydrostatique 5 constitué d'un tourillon 51 ménagé sur la partie amont du flasque extérieur 33 du rotor et d'un coussinet 52 ménagé sur la pièce de raccordement 44. Le coussinet comprend une pluralité d'alvéoles de portance 53 qui sont mises en communication avec la chambre d'écoulement 2. De la sorte, les alvéoles de portance sont alimentées par le fluide circulant dans la pompe à la pression régnant dans la chambre d'écoulement 2 qui est supérieure à la pression régnant dans la tubulure d'entrée 1. Il s'établit donc un débit de fuite du palier qui s'évacue essentiellement vers le bas où il rejoint la zone basse pression régnant à l'admission de la roue. L'alimentation des alvéoles de portance peut s'effectuer directement à travers des orifices (ou gicleurs) individuels 54, mais de préférence ceux-ci déboucheront dans un collecteur interne 55 ménagé dans la pièce de raccordement 44 et mis lui-même en communication avec l'intérieur de la chambre d'écoulement par un orifice 56.

L'alésage du coussinet et la surface correspondante du tourillon peuvent être revêtus par des métaux durs capables de limiter, au cours du fonctionnement de la pompe, les conséquences des éventuels contacts directs du coussinet et du tourillon. Par exemple, le coussinet et le tourillon pourront être en acier revêtu de carbures ou bien d'alliages à base de nickel ou cobalt.

De plus, selon un perfectionnement représenté sur la figure 3, on peut aménager dans le stator, entre les flasques extérieurs 33 du rotor et 43 du stator, un espace annulaire 45 qui est mis en communication par des conduits 46 avec un espace annulaire correspondant 15 ménagé à l'extrémité de la tubulure d'entrée, en amont du coussinet. L'efficacité du palier sera ainsi augmentée, le débit de fluide pouvant s'évacuer aussi bien vers le haut que vers le bas du coussinet du fait de l'équilibrage des pressions.

Grâce à cette disposition du palier hydrostatique en amont du rotor, il est possible de placer une barrière thermique 6 directement au-dessus du disque 32 du rotor c'est-à-dire à la hauteur de la paroi 22 de la chambre d'écoulement. Les joints tournants d'étanchéité 7 pourront ainsi être rapprochés du rotor, ce qui réduit la longueur de la ligne d'arbre. La barrière thermique est constituée, de façon classique, par exemple sous la forme d'un échangeur entourant l'arbre 30.

Bien entendu, l'invention ne se limite pas aux détails du mode de réalisation qui vient d'être décrit.

**Revendications**

1. Pompe centrifuge de circulation de fluide, comprenant une chambre d'écoulement (2) de forme torique entourant une tubulure d'entrée (1) et limitée du côté opposé à celle-ci par une paroi transversale (22), un rotor (3) monté à l'extrémité d'un arbre moteur (30) s'étendant, dans le prolongement de l'axe de la tubulure d'entrée (1), du côté extérieur à la paroi (22) de la chambre d'écoulement (29), ledit rotor (3) comprenant une pluralité d'ailettes (31) fixées entre un disque (32) monté à l'extrémité de l'arbre moteur (30) et un flasque extérieur (33), et un stator (4) en forme de diffuseur débouchant dans la chambre d'écoulement (2) et constitué d'une pluralité d'ailettes fixes (41) disposées entre la paroi transversale (22) de la chambre d'écoulement (2) et un flasque extérieur (43) placé dans le prolongement du flasque extérieur (33) du rotor (3) et relié à l'extrémité de la tubulure d'entrée (1) par une pièce de raccordement (44) sensiblement cylindrique et entourant le flasque extérieur (33) du rotor (3), l'arbre (30) étant guidé par un palier hydrostatique (5) comprenant un tourillon (51) solidaire du rotor (3) et un coussinet fixe (52) constitué d'une pluralité d'alvéoles de portance (53) entourant le tourillon (51) et alimentés sous pression par le fluide circulant dans la pompe, caractérisé en ce que le tourillon (51) du palier hydrostatique est ménagé sur la partie amont du flasque extérieur (33) du rotor (3), en ce que le coussinet (52) est ménagé à l'intérieur de la pièce de raccordement cylindrique (44) du stator (4) qui s'emboîte dans la tubulure d'entrée, chaque alvéole de portance (53) ménagé dans le coussinet (52) étant mis en communication avec l'intérieur de la chambre d'écoulement (2) en aval des ailettes (41) du stator (4) par un orifice (54) d'alimentation en fluide à la pression régnant dans la chambre d'écoulement, et en ce qu'un espace annulaire (45) est ménagé en aval du coussinet (52), entre les flasques extérieurs (33) du rotor (3) et (43) du stator (4), et communique avec la tubulure d'entrée (1) en amont du coussinet (52) par au moins un conduit (46) d'équilibrage des pressions, ménagé dans la pièce de raccordement (44).

2. Pompe centrifuge selon la revendication 1, caractérisé par le fait que chaque alvéole de portance est munie d'un orifice (54) en forme de gicleur débouchant dans un collecteur interne (55) ménagé dans la pièce de raccordement (44) et mis en communication avec la chambre d'écoulement (2) par au moins un orifice (56).

3. Pompe centrifuge selon la revendication (1), caractérisé par le fait que la tubulure d'entrée (1) est munie à son extrémité d'un embout (11) s'emboîtant extérieurement sur la pièce de raccordement (44) du flasque extérieur (43) du stator (4).

4. Pompe centrifuge selon la revendication (1), caractérisé par le fait qu'une barrière thermique (6) de forme annulaire entoure la partie de l'arbre moteur traversant la paroi transversale (22) de la chambre d'écoulement (2) jusqu'à la face postérieure du disque (32) du rotor (3).

## Patentansprüche

1. Umwälzkreiselpumpe mit einer torusförmigen, einen Eintrittsstutzen (1) umgebenden Strömungskammer (2), die an der zu diesem entgegengesetzten Seite durch eine Querwand (22) begrenzt ist, einem Läufer (3), der am Ende einer Antriebswelle (30) angeordnet ist, die sich in der Achsverlängerungen des Eintrittsstutzens (1) auf der Außenseite der Querwand (22) der Strömungskammer (2) erstreckt, wobei der Läufer (3) eine Mehrzahl von Schaufeln (31) aufweist, die zwischen einer am Ende der Antriebswelle (30) angebrachten Scheibe (32) und einem Außenflansch (33) befestigt sind, sowie einen in Form eines Diffusors ausgebildeten Stators (4), der in die Strömungskammer (2) mündet und aus einer Mehrzahl von festen Schaufeln (41) gebildet ist, die zwischen der Querwand (22) der Strömungskammer (2) und einem Außenflansch (43) angeordnet sind, der in der Verlängerung des Außenflansches (33) des Läufers (3) angeordnet ist, und mit dem Ende des Eintrittsstutzens (1) mittels eines Verbindungsteiles (44) verbunden ist, das im wesentlichen zylindrisch ist und den Außenflansch (33) des Läufers (3) umgibt, wobei die Welle (30) durch ein hydrostatisches Lager (5) geführt ist, das einen mit dem Läufer (3) verbundenen Lagerzapfen (51) und ein festes Futter (52) aufweist, das aus einer Mehrzahl von Auftriebszellen (53) gebildet ist, die den Lagerzapfen (51) umgeben und durch das in der Pumpe zirkulierende Fluid unter Druck gesetzt werden, dadurch gekennzeichnet, daß der Lagerzapfen (51) des hydrostatischen Lagers auf dem stromaufwärtigen Bereich des Außenflansches (33) des Läufers (3) ausgebildet ist, daß das Futter (52) im Inneren des zylindrischen Verbindungsteils (44) des Stators (4) ausgebildet ist, der in den Eintrittsutzen vorspringt, wobei jede Auftriebszelle (53), die in dem Futter (52) ausgebildet ist, mit dem Inneren der Strömungskammer (2) stromab der Schaufeln (41) des Stators (4) durch eine Fluidzufuhröffnung (54) in Verbindung gesetzt wird, bei dem Druck, der in der Strömungskammer herrscht, und daß ein ringförmiger Raum (45) stromab des Futters (52) zwischen den Außenflanschen (33) des Läufers (3) und (43) des Stators (4) ausgebildet ist, und mit dem Eintrittsstutzen (1) stromauf des Futters (52) durch wenigstens eine Druckausgleichsleitung (46) in Verbindung steht, die in dem Verbindungsteil (44) ausgebildet ist.

2. Umwälzkreiselpumpe nach Anspruch 1, dadurch gekennzeichnet, daß jede Auftriebszelle mit einer Öffnung (54) in Form einer Spritzdüse versehen ist, die in einen inneren Kollektor (55) mündet, der in dem Verbindungsteil (44) ausgebildet ist, und mit der Strömungskammer (2) durch wenigstens eine Öffnung (56) in Verbindung gesetzt ist.

3. Umwälzkreiselpumpe nach Anspruch 1, dadurch gekennzeichnet, daß der Eintrittsstutzen (1) an seinem Ende mit einem Endstück (11) verbunden ist, das das Verbindungsteil (44) des äußeren Flansches (43) des Stators (4) umgibt.

4. Umwälzkreiselpumpe nach Anspruch 1, dadurch gekennzeichnet, daß eine Wärmesperre (6) von Ringform den Bereich der Antriebswelle umgibt, der die Querwand (22) der Strömungskammer (2) bis zur hinteren Seite der Scheibe (32) des Läufers (3) durchquert.

## Claims

1. Centrifugal fluid circulating pump comprising a flow chamber (2) of toric shape surrounding an inlet connection (1) and bounded, on the side opposite the latter, by a transverse wall (22), a rotor (3) mounted at the end of a drive shaft (30) extending, in line with the axis of the inlet connection (1), on the side outside the wall (22) of the flow chamber (2), the said rotor (3) having a plurality of vanes (31) fixed between a disc (32) mounted at the end of the drive shaft (30) and an external plate (33), and a stator (4) in the form of a diffuser leading into the flow chamber (2) and consisting in a plurality of fixed vanes (41) disposed between the transverse wall (22) of the flow chamber (2) and an outside plate (43) disposed as an extension of the outside plate (33) of the rotor (3) and connected to the end of the inlet connection (1) by a substantially cylindrical connector (44) surrounding the outside plate (33) of the rotor (3), the shaft (30) being guided by a hydrostatic bearing (5) comprising a journal (51) fastened to the rotor (3) and a fixed bearing (52) consisting of a plurality of supporting sockets (53) surrounding the journal (51) and fed under pressure with the fluid circulating in the pump, characterised by the fact that the journal (51) of the hydrostatic bearing is disposed on the upstream part of the outside plate (33) of the rotor (3), that the bearing (2) is disposed inside the cylindrical connector (44) of the stator (4) which fits in the inlet connection, each supporting socket (53) formed in bearing (52) being brought into communication with the interior of the flow chamber (2) downstream of the vanes (41) of the stator by an aperture (54) supplying fluid at the pressure prevailing in the flow chamber, and that an annular space (45) is provided downstream of the bearing (52) between the outside plates (33, 43) of the rotor (3) and stator (4) respectively and communicates with the inlet connection (1) upstream of the bearing (52) by at least one pressure balancing duct (46) formed in the connector (44).

2. Centrifugal pump according to claim 1, characterised by the fact that each supporting socket is provided with an aperture (54) in the form of a jet leading into an internal manifold (55) disposed in the connector (44) and brought into communication with the flow chamber (2) by at least one aperture (56).

3. Centrifugal pump according to claim 1, characterised by the fact that the inlet connection (1) is provided at its end with a mouth (11) fitting externally over the connector (44) of the outside plate (43) of the stator (4).

4. Centrifugal pump according to claim 1, characterised by the fact that a thermal barrier (6) of annular shape surrounds that part of the drive shaft which passes through the transverse wall (22) of the flow chamber (2), as far as the rear face of the disc (32) of the rotor (3).

# FIG.1

FIG.2

FIG.3